# FASCICULE DE BREVET EUROPEEN

(11) **EP 0 711 064 B1**
(45) Date de publication et mention de la délivrance du brevet: **22.12.1999**
(21) Numéro de dépôt: 95402427.9
(22) Date de dépôt: 02.11.1995
(51) Int. Cl.: H04N 1/327

(54) **Commutation d'un terminal, tel qu'un télécopieur, à l'un de deux réseaux**
Schalten eines Endgeräts, wie Faksimilegerät, auf einen von zwei Kanälen
Switching of a terminal, such as a facsimile terminal, to one of two channels

(30) Priorité: 03.11.1994 FR 9413269
(43) Date de publication de la demande: 08.05.1996
(73) Titulaire: FRANCE TELECOM, 75015 Paris (FR); TELEDIFFUSION DE FRANCE, 75015 Paris (FR)
(72) Inventeur: Poignet, Alain, F-35700 Rennes (FR); Henriot, Alain, F-35690 Acigne (FR)
(74) Mandataire: Martinet & Lapoux

(56) Documents cités:
- DE-A- 4 020 588
- US-A- 4 991 201

## Description

La présente invention concerne un dispositif de commutation entre un terminal transmetteur et un récepteur de données et une ligne téléphonique d'un réseau téléphonique commuté. L'invention s'applique plus particulièrement au cas où le récepteur de données reçoit des données diffusées par un réseau radioélectrique de diffusion et le terminal est un télécopieur, bien que le terminal puisse être un terminal télex, vidéotex ou télétex.

Des télécopieurs sont de plus en plus installés aussi bien dans le secteur professionnel que dans le secteur résidentiel. Un télécopieur est classiquement relié au réseau téléphonique commuté par une ligne téléphonique pour transmettre et recevoir des données de télécopie. Le protocole de communication utilisé par les télécopieurs des groupes 1 à 3 est défini par la recommandation T30 du CCITT relative à l'interfonctionnement automatique des télécopieurs appartenant aux groupes 1 à 3. Les télécopieurs du groupe 4 communiquent à travers le réseau numérique à intégration de services RNIS suivant un protocole analogue à celui mis en oeuvre pour le télétex.

D'autre part, un réseau radioélectrique de diffusion de données, tel que par exemple DIDON ou DIGICAST (marques déposées), diffuse des données qui peuvent correspondre notamment à des télécopies destinées à un récepteur approprié. Le récepteur transmet ensuite les données de télécopie reçues à un télécopieur classique. La diffusion de télécopie s'adresse plus particulièrement à des récepteur et télécopieur mobiles équipant par exemple un véhicule automobile.

Un télécopieur est donc connectable soit au réseau téléphonique commuté, soit à un réseau de diffusion de données à travers un récepteur approprié. Ces deux connexions sont exclusives l'une de l'autre. A un instant donné, l'usager doit choisir entre la possibilité de recevoir et de transmettre des télécopies sur le réseau commuté et par conséquent de ne pas recevoir de télécopie diffusée par le réseau de diffusion, et la possibilité de recevoir des télécopies diffusées et par conséquent de ne pas recevoir et transmettre des télécopies par le réseau commuté. En pratique, l'usager est contraint à des connexions et déconnexions manuelles successives du télécopieur soit à une ligne d'abonné du réseau commuté, soit à des bornes du récepteur approprié, si bien que le télécopieur ne reçoit pas toutes les télécopies qui lui sont destinées.

Selon une autre variante, l'usager possède deux télécopieurs connectés en permanence l'un au réseau commuté et l'autre au réseau de diffusion, ce qui est coûteux.

Le brevet US-A-4 991 201 divulgue un dispositif automatique de commutation qui relie un télécopieur sélectivement à un récepteur radiofréquence et à une ligne téléphonique en dépendance de la priorité de communication attribuée à des réceptions de premiers messages de télécopie depuis le récepteur radiofréquence vers le télécopieur, d'une part, et à des réceptions de seconds messages de télécopie depuis la ligne téléphonique et des transmissions de troisièmes messages de télécopie par le télécopieur via la ligne téléphonique, d'autre part.

Si la réception d'un premier message de télécopie est prioritaire, le dispositif de commutation interrompt toute communication avec le télécopieur via la ligne téléphonique, et établit la liaison entre le récepteur radiofréquence et le télécopieur pour lui transmettre directement un troisième message. Dans ce cas, le transmetteur qui a transmis le second ou troisième message de télécopie ayant pu être interrompu et qui est un terminal distant ou le télécopieur lui-même, reçoit du dispositif de commutation un message d'invitation à retransmettre le second ou troisième message de télécopie interrompu. Ainsi, le second ou troisième message de télécopie peut être interrompu pour transmettre un premier message de télécopie même erroné ou partiel du récepteur radiofréquence au télécopieur, puisque le dispositif de commutation ne comprend aucun moyen pour vérifier si un premier message reçu par le récepteur radiofréquence est correct ou incomplet.

Si la réception d'un second message de télécopie et la transmission d'un troisième message de télécopie à travers la ligne téléphonique est prioritaire, le dispositif de commutation ne fait rien lors de la réception d'un premier message de télécopie quand le télécopieur reçoit un second message de télécopie ou transmet un troisième message de télécopie. Le premier message précédent est perdu. Un message d'invitation à retransmettre le premier message de télécopie peut être envoyé au terminal distant correspondant via une ligne téléphonique câblée, lorsque la ligne téléphonique est libérée.

La présente invention vise à fournir un dispositif automatique de commutation n'interrompant pas les messages de télécopie en cours de réception ou transmission par le télécopieur et vérifiant que les premiers messages de télécopie reçus par le récepteur radiofréquence sont parfaitement corrects avant de décider de les transmettre au télécopieur seulement lorsque la ligne téléphonique est disponible. Ainsi aucun premier message de télécopie incorrect n'est inutilement transmis au télécopieur, ce qui évite toute occupation intempestive de la ligne téléphonique, et aucun premier message de télécopie réputé correctement reçu n'est perdu à cause d'une occupation de la ligne téléphonique par un second ou troisième message de télécopie en cours de communication.

A cette fin, un dispositif de commutation entre un terminal de données recevant des premiers et seconds messages de données et transmettant des troisièmes messages de données, un récepteur de données pour recevoir des premiers messages, et une ligne téléphonique recevant les seconds messages depuis un réseau téléphonique et transmettant les troisièmes messages vers le réseau téléphonique, le dispositif comprenant un moyen de commutation pour connecter sélectivement le terminal de données au récepteur de données et à la ligne téléphonique, est caractérisé en ce qu'il comprend un moyen pour reconstituer des groupes de paquets à partir de paquets diffusés reçus par le récepteur et rejeter des paquets ou des groupes de paquets erronés ou incomplets, un moyen de mémoire pour mémoriser les groupes de paquets corrects de manière à reconstituer les premiers messages, et un moyen de communication pour lire les premiers messages reconstitués dans le moyen de mémoire et en ce que ledit moyen de commutation maintient une connexion entre le terminal de données et la ligne téléphonique au moins tant que l'un des seconds et troisièmes messages de données est reçu ou transmis par le terminal de données, et connecte le moyen de communication et le terminal de données lorsqu'un premier message est reconstitué dans le moyen de mémoire et lorsque la ligne téléphonique est inoccupée par aucun des seconds et troisièmes messages de données afin que le moyen de communication lise et transmette ledit au moins un premier message reconstitué vers le terminal de données.

Ainsi, lorsque le terminal de données est un télécopieur, celui-ci peut tantôt recevoir des télécopies correctes et complètes transmises par un réseau de diffusion de données, tantôt recevoir ou transmettre des télécopies à travers le réseau téléphonique commuté, sans pour cela interrompre une communication de télécopie ou perdre une télécopie.

De préférence, chaque groupe de paquets reçu contient une séquence de contrôle, et le moyen pour reconstituer n'écrit pas le groupe de paquets dans le moyen de mémoire lorsque le résultat d'un traitement prédéterminé du contenu du groupe de paquets diffère d'un résultat prédéterminé. Le moyen pour reconstituer peut écrire les groupes de paquets reconstitués et corrects d'un premier message de télécopie dans le moyen de mémoire progressivement en réponse à R répétitions successives du troisième message de télécopie, R étant un nombre entier strictement positif. Tout groupe de paquets reçu réputé erroné ou incomplet n'est pas écrit dans le moyen de mémoire. Ainsi, dès que le premier message de télécopie est complètment et entièrement reconstitué après r répétitions, avec r inférieur ou égal à R, les R-r répétitions du premier message sont ignorées et ne sont pas mémorisées.

Lorsque les premiers messages mémorisés comprennent des demandes d'accusé de réception qui sont détectées par le moyen de communication, le dispositif de commutation comprend une mémoire pour mémoriser les demandes d'accusé de réception détectées par le moyen de communication, et un moyen de transmission pour transmettre des messages d'accusé de réception en réponse aux demandes d'accusé de réception lues dans ladite mémoire, le moyen de commutation connectant le moyen de transmission à la ligne téléphonique lorsqu'une demande d'accusé de réception est mémorisée en mémoire et aucun second ou troisième message de données n'est à recevoir ou transmettre dans la ligne téléphonique.

Afin de signaler une occupation de la ligne téléphonique ou du télécopieur, le dispositif de commutation comprend un moyen de simulation d'occupation. Le moyen de commutation connecte le moyen de simulation à la ligne téléphonique lorsque le moyen de communication est connecté au terminal de données afin de lui transmettre un premier message (MT1). Le moyen de commutation connecte le moyen de simulation d'occupation au terminal de données lorsqu'un message d'accusé de réception est à transmettre dans la ligne téléphonique par le moyen de transmission et aucun des premiers, seconds et troisièmes messages de données n'est à recevoir ou transmettre.

L'invention concerne également un procédé de commutation pour la mise en oeuvre du dispositif de commutation selon l'invention. A cette fin, le procédé comprend les étapes de :
- surveiller une demande de communication d'arrivée ou de départ entre le terminal de données et un terminal distant à travers la ligne téléphonique du réseau téléphonique commuté,
- maintenir une connexion entre le terminal de données et la ligne téléphonique à travers le moyen de commutation en réponse à une demande de communication détectée à l'étape de surveiller, et mémoriser les groupes de paquets corrects et complets reçus de tout premier message en cours de reconstruction dans le moyen de mémoire notamment pendant que la ligne téléphonique est occupée,
- vérifier si un premier message de données reconstitué est mémorisé dans le moyen de mémoire lorsqu'aucune demande de communication n'est détectée à l'étape de surveiller, et en réponse à un premier message de données reconstitué mémorisé dans le moyen de mémoire, connecter le terminal de données au moyen de communication à travers le moyen de commutation lorsque la ligne téléphonique est inoccupée par aucun des seconds et troisièmes messages,
- établir une communication entre le moyen de communication et le terminal de données pour transmettre le premier message de données mémorisé, et
- connecter le terminal de données à la ligne téléphonique après la rupture de la communication entre le moyen de communication et le terminal de données.

De préférence, chaque groupe de paquets reçu est validé en traitant ledit groupe avec une séquence de contrôle de groupe qu'il contient, de manière à n'écrire dans ledit moyen de mémoire que des groupes de paquets corrects et complets.

Le procédé peut comprendre la réception de R répétitions successives de chaque premier message de données afin de n'écrire progressivement que les groupes de paquets reconstitués correctement et complètement dans le moyen de mémoire, R étant un nombre entier au moins égal à un.

Après l'étape de vérifier si un premier message de données est mémorisé dans le moyen de mémoire, le procédé peut comprendre les étapes de :
- vérifier si au moins une demande d'accusé de réception est mémorisée dans la mémoire, et
- en réponse à une demande d'accusé de réception mémorisée dans la mémoire, connecter le moyen de transmission de message d'accusé de réception à la ligne téléphonique à travers le moyen de commutation, et
- établir une communication entre le moyen de transmission de message d'accusé de réception et un terminal distant à travers la ligne téléphonique pour transmettre un message d'accusé de réception au terminal distant.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un dispositif de commutation selon l'invention ;
- la figure 2 représente schématiquement un message de télécopie diffusé sur le réseau de diffusion de données ;
- la figure 3 représente schématiquement des messages de télécopie reçus depuis le réseau de diffusion de données et mémorisés dans le dispositif de commutation selon l'invention ;
- la figure 4 est un circuit commutateur compris dans le dispositif selon l'invention ; et
- la figure 5 est un algorithme de commutation interne au dispositif selon l'invention.

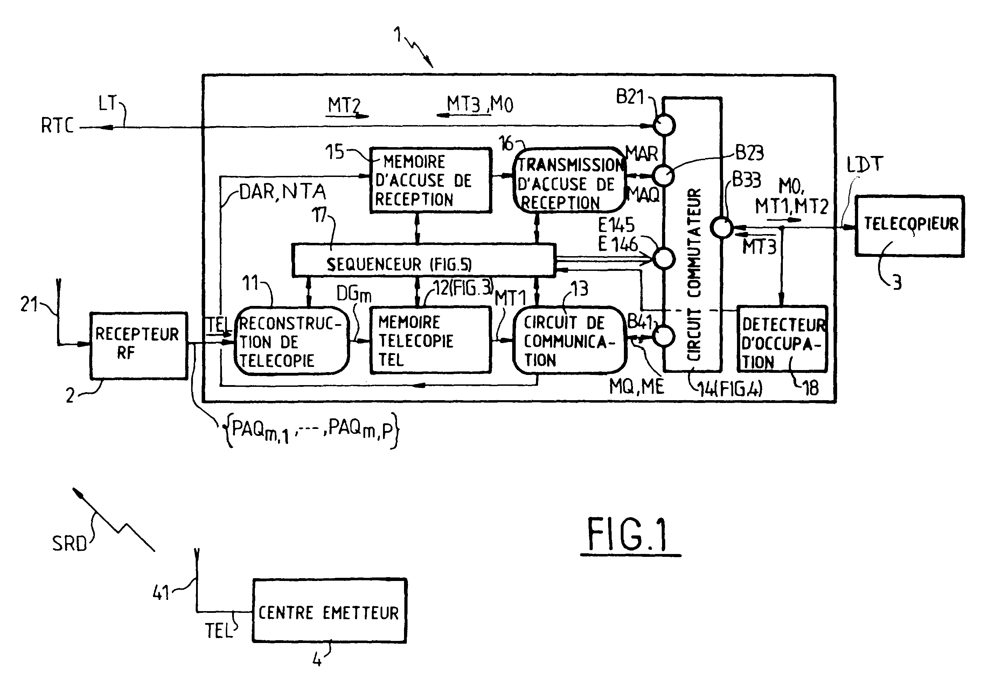

En référence à la figure 1, un dispositif de commutation 1 selon l'invention est relié à une ligne d'abonné téléphonique analogique LT à 2 fils d'un réseau téléphonique commuté RTC, public ou privé. Le dispositif 1 est également relié à un récepteur radiofréquence de données 2 qui reçoit des données diffusées par un réseau radioélectrique ayant une couverture étendue via une antenne de réception 21. Enfin le dispositif commutateur 1 est relié à un terminal transmetteur et récepteur de données, tel qu'un télécopieur 3 auquel on se réfèrera dans la suite, à travers un tronçon court de ligne téléphonique LDT, ou bien à un circuit de gestion de télécopie intégré dans un ordinateur, ou bien encore est relié à ou intégré dans un terminal télex, un terminal vidéotex, ou un terminal télétex. Le dispositif de commutation est réalisé sous la forme d'un boîtier à connecter à un télécopieur classique ou sous la forme d'un circuit électronique incorporé dans le télécopieur.

Le réseau radioélectrique de diffusion de données, connu en soi, est à titre d'exemple le réseau de radiodiffusion sonore de qualité haute fidélité DIGICAST (marque déposée) qui diffuse des données par paquet. Dans la suite, seule la diffusion de données est considérée.

Un centre émetteur 4 met en forme les données à émettre, sous la forme d'un signal radioélectrique de données SRD émis par une antenne d'émission 41. Le signal SRD est reçu par l'antenne 21.

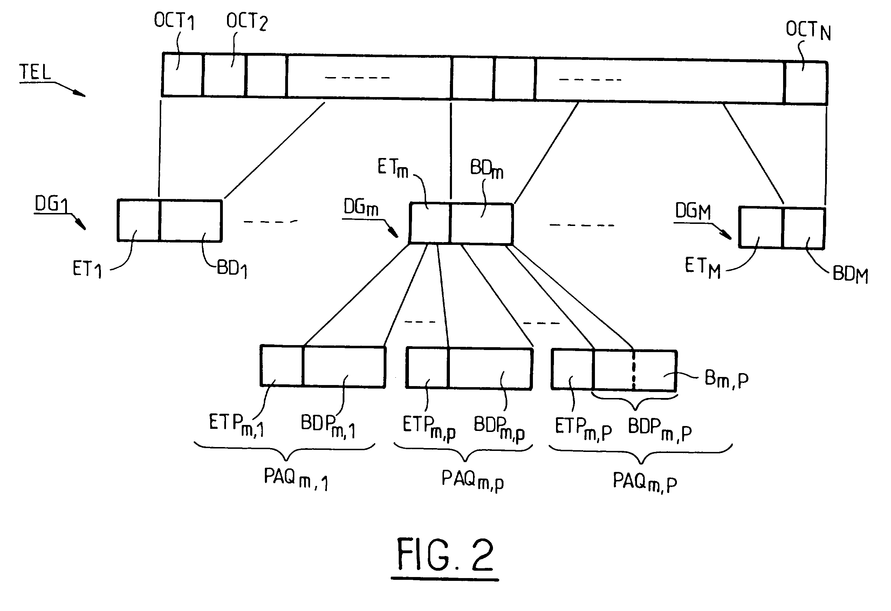

Une télécopie à diffuser par le réseau de diffusion de données est un document graphique quelconque. En référence à la figure 2, dans le centre émetteur 4, la télécopie est préalablement numérisée en un message de télécopie TEL sous la forme d'une suite de N octets OCT₁ à OCT_{N}, N étant un nombre entier positif quelconque dépendant de la longueur du document. Ce message de télécopie TEL est émis successivement R fois par le centre émetteur 4, R étant un nombre entier strictement positif, c'est-à-dire au moins égal à 1 et typiquement égal à 5, afin que, en réception dans le dispositif de commutation 1, le message soit validé avant toute retransmission au télécopieur 3.

Le message de télécopie TEL est divisé en des groupes de données DG₁ à DG_{M} de longueur variable, M étant un nombre entier dépendant de la longueur du document. Un groupe de données DGₘ, où m est un nombre entier compris entre 1 et M, a une longueur maximale de 8192 octets. Le groupe de données DGₘ comprend un en-tête de groupe ETₘ contenant notamment un identificateur de télécopie pouvant inclure un numéro de télécopie 1 à R=5 pour identifier le message de télécopie TEL auquel appartient le groupe de données, un numéro séquentiel de groupe pour ordonner le groupe dans le message de télécopie TEL, et un indicateur de longueur de groupe. Le groupe de données DGₘ comprend un bloc de données BDₘ contenant des octets consécutifs parmi les octets OCT₁ à OCT_{N} et est terminé par une séquence de contrôle de groupe. Cette séquence sert à valider le groupe de données en fonction d'un polynôme générateur caractérisant, de manière connue, un code de détection d'erreur prédéterminé, dit code de redondance cyclique (CRC), appliqué sur les bits contenus dans le groupe et précédant la séquence de contrôle de groupe.

Le groupe de données DGₘ est formé d'un ensemble de paquets PAQ_{m,1} à PAQ_{m,P} de longueur fixe, P étant un nombre entier positif. Un paquet PAQ_{m,p} , où p est un nombre entier compris entre 1 et P, comprend un en-tête de paquet ETP_{m,p} et un bloc de données BDP_{m,p}. L'en-tête ETP_{m,p} comprend notamment un identificateur de groupe pour identifier le groupe de données DGₘ auquel appartient le paquet, un numéro séquentiel de paquet qui ordonne le paquet dans le groupe, et un indicateur d'extrémité de groupe pour repérer le dernier paquet du groupe. Le bloc de données BDP_{m,p} contient des données du groupe de données DGₘ. Les paquets ont une longueur fixe prédéterminée. En conséquence, le bloc de données BDP_{m,P} du dernier paquet PAQ_{m,P} associé au groupe de données DGₘ comprend des octets de bourrage B_{m,P}. Chaque paquet de données est de préférence codé suivant un code de correction d'erreurs connu afin de corriger les erreurs dans le paquet à la réception dues aux perturbations électromagnétiques dans la transmission depuis le centre émetteur 4.

Les paquets de données à diffuser PAQ_{m,1} à PAQ_{m,P} sont transposés en le signal SRD à émettre d'une manière connue en soi, par exemple sous forme d'un signal de données modulant une fréquence porteuse. Des paquets de données de plusieurs premiers messages de télécopie à diffuser sont entrelacés dans le signal SRD.

Un mécanisme de contrôle d'accès, dérivé du système "Eurocrypt" normalisé par le CEN (Comité Européen de Normalisation) pour la télévision, est associé à la diffusion de données pour assurer la confidentialité des données et la facturation dans le cas de services payants.

En référence à nouveau à la figure 1, le récepteur radiofréquence de données 2 reçoit le signal SRD via l'antenne 21 et extrait du signal SRD les paquets de données transmis PAQ_{1,1} à PAQ_{M,P} des groupes de données DG₁ à DG_{M} appartenant à un premier message de télécopie TEL. Le récepteur 2 applique les paquets de données extraits au dispositif commutateur 1.

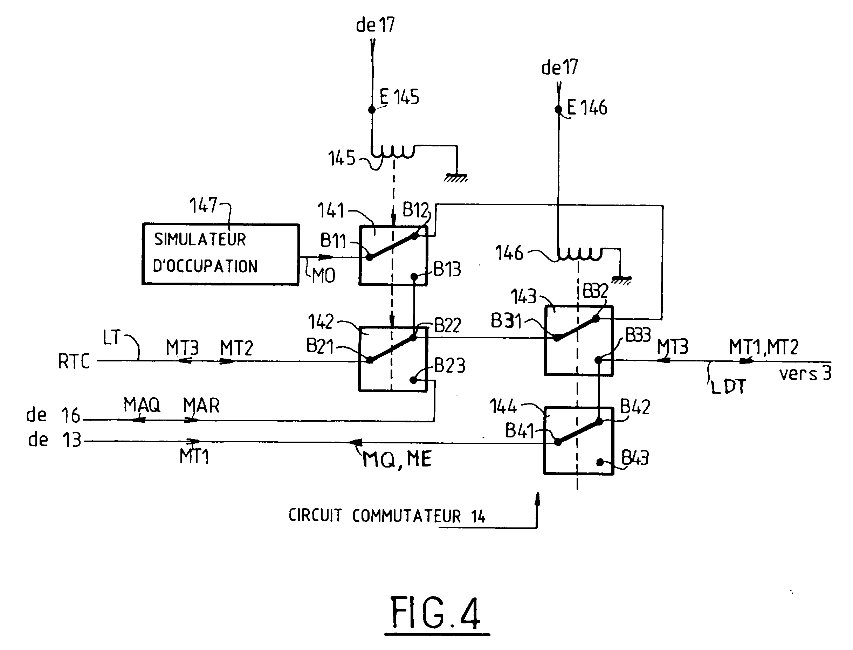

A partir de la sortie du récepteur 2, le dispositif de commutation 1 comprend un circuit de reconstruction de télécopie 11 relié en série avec une mémoire de télécopie 12. La mémoire 12 possède une sortie reliée à un circuit de communication 13. Une première sortie du circuit de communication 13 est reliée à une borne d'entrée B41 d'un circuit commutateur 14 décrit dans la suite en référence à la figure 4. Une seconde sortie du circuit de communication 13 est reliée à une mémoire d'accusé de réception 15 en série avec un circuit de transmission d'accusé de réception 16. Le circuit 16 est relié à une première borne d'entrée/sortie B23 du circuit commutateur 14.

La ligne téléphonique LT est reliée à une seconde borne d'entrée/sortie B21 du circuit commutateur 14. De même, le circuit commutateur 14 est relié au tronçon de ligne téléphonique LDT desservant le télécopieur 3 par une troisième borne d'entrée/sortie B33.

Un séquenceur 17 comprenant un microprocesseur dont les fonctions sont décrites dans la suite, est relié à chacun des circuits 11 à 16, pour surveiller notamment le contenu des mémoires 12 et 15, et à un détecteur d'occupation 18 relié à la borne B33 pour détecter une occupation de la ligne téléphonique entre le télécopieur 3 et la borne B33.

En pratique, chacune des bornes du circuit commutateur 14, ou chacune des bornes des contacts inclus dans le circuit commutateur 14, est un port à deux bornes lorsque la ligne téléphonique a deux fils, ou un port à quatre bornes lorsque la ligne téléphonique a quatre fils.

Le circuit de reconstruction de télécopie 11 est destiné à reconstruire les groupes de données après correction des paquets et les messages de télécopie, à partir des groupes reconstruits et validés, afin que le circuit de communication 13 ne restitue que des messages de télécopie corrects et complets au télécopieur 3 et différés à cause des reconstructions et vérifications décrites ci-après.

Le circuit de reconstruction de télécopie 11 reçoit les paquets de données PAQ_{1,1} à PAQ_{M,P} relatifs à un premier message de télécopie TEL depuis le récepteur 2. Chaque paquet est corrigé en fonction du code de correction d'erreurs. Si un paquet est perdu en constatant que le numéro séquentiel de paquet saute d'une ou plusieurs unités, le groupe ayant perdu ce paquet sera réputé inacceptable et rejeté lors de sa vérification ultérieure. Chaque paquet de données reçu PAQ_{m,p} est écrit dans une colonne de cases de paquet dans une mémoire tampon incluse dans le circuit 11, correspondant au groupe de données en cours de reconstruction, en fonction de l'identificateur de groupe inclus dans l'en-tête ETP_{m,p} du paquet et le range dans la prochaine case de paquet en fonction du numéro séquentiel de paquet inclus dans l'en-tête du paquet.

Le circuit 11 concatène ainsi les paquets de données reçus en les groupes de données DG₁ à DG_{M} en fonction des informations dans les en-têtes ETP_{1,1} à ETP_{M,P} des paquets reçus. Après concaténation des blocs de données BDP_{m,1} à BDP_{m,P} des paquets corrigés et détectés d'un groupe donné DGₘ, un circuit de vérification inclus dans le circuit 11 vérifie que le groupe DGₘ ainsi reconstitué est correct et complet. La vérification du groupe consiste à diviser la suite des bits contenus dans le groupe DGₘ, y compris la séquence de contrôle de groupe, par le polynôme générateur du code de redondance cyclique. Si le reste de la division est différent d'un reste prédéterminé, le groupe de données DGₘ est erroné et est refusé en ne le mémorisant pas dans la mémoire 12. Les groupes DG₁ à DG_{M} qui sont validés comme corrects et complets par le circuit de vérification sont seulement écrits dans une file de cases de la mémoire 12 en fonction des numéros séquentiels de groupe afin d'y reconstituer le message de télécopie reçu TEL, comme décrit ci-après.

Lorsque le circuit 11 a reconstitué et validé un groupe de données correct reçu DGₘ, il analyse l'en-tête ETₘ du groupe de données DGₘ pour déterminer si ce groupe de données appartient à un premier message de télécopie déjà partiellement mémorisé.

Si l'identificateur de télécopie inclus dans l'en-tête ETₘ du groupe de données correct reconstitué DGₘ diffère d'identificateurs de télécopie mémorisés dans le circuit 11 et relatifs à des premiers messages de télécopie en cours de réception et reconstitution, alors le circuit 11 assigne une file de cases libre dans la mémoire 12 au message de télécopie auquel appartient le groupe, et crée un en-tête de message de télécopie EDR. Le circuit 11 écrit dans la file de cases assignée de la mémoire 12 l'en-tête de message de télécopie EDR dans la première case de la file assignée et le groupe de données correct reconstitué en adressant en écriture une case de la file de cases assignée en fonction du numéro séquentiel de groupe inclus dans l'en-tête du groupe de données correct reconstitué.

Si l'identificateur de télécopie inclus dans l'en-tête ETₘ du groupe de données correct reconstitué DGₘ indique que le groupe appartient à un message de télécopie déjà partiellement écrit dans la mémoire 12, alors le groupe est écrit dans une case de la file de cases assignée à ce message de télécopie adressée en fonction du numéro séquentiel du groupe de données correct reconstitué.

Ainsi, dans les deux cas, le numéro séquentiel de groupe inclus dans l'en-tête du groupe de données correct reconstitué signale le positionnement du groupe de données dans le message de télécopie afin de l'écrire dans la case de la file de cases de mémoire assignée du groupe.

Comme le premier message de télécopie TEL est répété R fois par le centre émetteur 4, des groupes de données même rejetés en réponse à des premières répétitions du message de télécopie TEL peuvent être reçus correctement et ensuite être écrits dans la mémoire 12 en réponse aux répétitions suivantes du message de télécopie TEL. La file de cases de la mémoire 12 assignée au message de télécopie TEL est ainsi remplie au fur et à mesure que le circuit de reconstruction 11 trouve des groupes de données corrects dans les R messages de télécopie TEL. Dès que le premier message de télécopie TEL est immédiatement reçu correctement, et donc écrit entièrement correctement dans la mémoire 12, le séquenceur 17 peut décider de lire le message de télécopie mémorisé TEL pour le transmettre au télécopieur 3 selon le procédé de l'invention décrit plus loin si le tronçon de la ligne téléphonique LDT est disponible. Les éventuels autres messages de télécopie TEL reçus ultérieurement, qu'ils soient corrects ou incorrects, sont systématiquement rejetés et ne sont pas mémorisés dans la mémoire 12.

Un message de télécopie TEL n'est pas transmis au télécopieur 3 par le dispositif de commutation 1 si après les R répétitions du message de télécopie TEL, au moins l'un des groupes de données DG₁ à DG_{M} est réputé incorrect par le circuit 11. Dans ces conditions, aucun message de télécopie incorrect n'est transmis au télécopieur 3 à travers le tronçon de ligne LDT afin d'éviter toute occupation inutile de la ligne téléphonique entre le dispositif de commutation 1 et le télécopieur 3 par des messages de télécopie erronées et inexploitables. Les messages de télécopie inexploitables et partiellement mémorisés dans la mémoire 12 sont périodiquement effacés par le séquenceur 17.

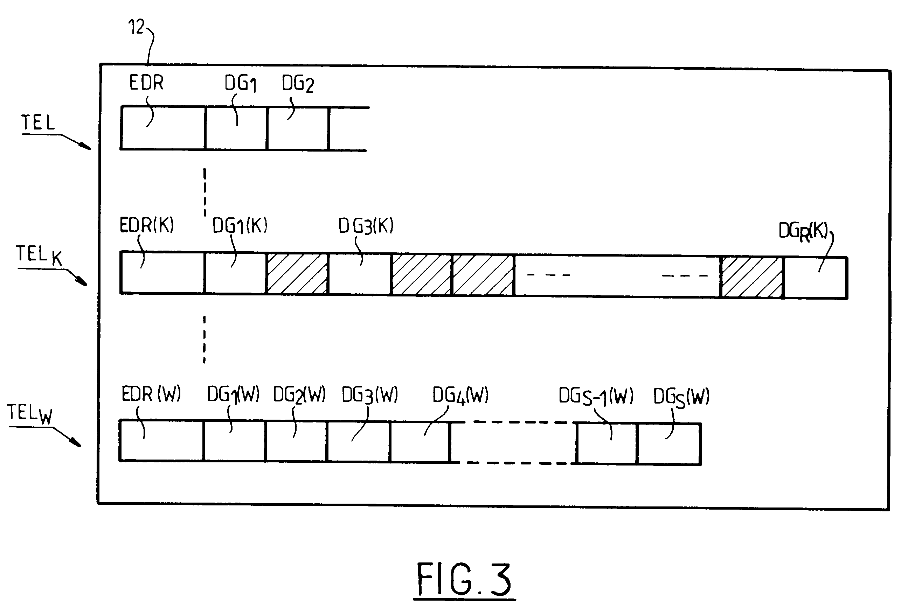

En référence à la figure 3, la mémoire 12 contient à un instant donné plusieurs messages de télécopie reçus, par exemple au nombre de trois, TEL, TEL_{K}, TEL_{W} qui sont dans des états différents et écrits dans des files (lignes) respectives de cases dans la mémoire 12. Les premiers messages de télécopie TEL, TEL_{K} et TEL_{W} sont associés à des en-têtes de message de télécopie EDR, EDR(K) et EDR(W) respectivement. L'en-tête EDR, EDR(K) ou EDR(W) contient un identificateur de télécopie, un indicateur d'état complet ou incomplet mis à jour par le circuit 11, et l'heure d'arrivée des dernières données.

L'indicateur d'état dans l'en-tête EDR indique que le message de télécopie TEL est incomplet et en cours de réception et de répétition. Deux groupes de données DG₁ et DG₂ du message TEL ont été reçus et mémorisés. Le dernier groupe de données du message de télécopie TEL n'a pas été validé ou reçu, et la taille de message de télécopie TEL n'est pas connue.

L'indicateur d'état dans l'en-tête EDR(K) indique que le message de télécopie TEL_{K} est incomplet. Toutefois le dernier groupe de données DG_{R}(K) a été déjà reçu, validé et mémorisé. Dans la file de cases de mémoire assignées au message TEL_{K} , des cases indiquées par des hachures sont vides de groupes de données intermédiaires qui sont en attente de réception. Un groupe de données intermédiaire est en attente de réception par exemple parce que les paquets de données ne sont pas diffusés consécutivement du premier au dernier pour un message de télécopie donné, ou parce que des paquets de données ont été perdus et/ou n'ont pas été reçus correctement par le récepteur de données 2.

L'indicateur d'état dans l'en-tête EDR(W) indique que le message de télécopie TEL_{W} est complet. Par conséquent, la file de cases dans la mémoire 12 assignée temporairement au message de télécopie TEL_{W} contient tous les groupes de données validés, c'est-à-dire corrects et complets, DG₁(W) à DG_{S}(W) du message de télécopie TEL_{N} et peut être transmis au télécopieur 3 si le tronçon de ligne téléphonique LDT entre le dispositif 1 et le télécopieur 3 est inoccupée.

Le circuit de communication 13 transmet des premiers messages de télécopie complets courts MT1 lus dans la mémoire 12 au télécopieur 3 suivant la recommandation T30 du CCITT. Une communication de premier message de télécopie entre le dispositif 1 et le télécopieur 3 est provoquée par le séquenceur 17 et est réalisée à travers le circuit commutateur 14, ces deux derniers circuits étant détaillés dans la suite.

De manière analogue à une communication entre deux télécopieurs, la communication de message de télécopie entre le dispositif 1 et le télécopieur 3 est composée de trois étapes principales relatives à l'établissement de la communication, la transmission du message de télécopie et la libération. Des messages de contrôle sont échangés entre le circuit 13 et le télécopieur 3 pour contrôler le bon déroulement de la communication. Les messages de contrôle sont notamment un message d'acquittement MQ et un message d'erreur ME transmis depuis le télécopieur 3 vers le circuit 13 à travers le tronçon de ligne LDT. Le message d'acquittement MQ indique que le message de télécopie a été correctement reçu par le télécopieur 3 et par exemple imprimé sur papier ou mémorisé dans une mémoire du télécopieur 3. Le message d'erreur ME indique une erreur de transmission.

Après la rupture de la communication entre le circuit 13 et le télécopieur 3 et si le télécopieur 3 a transmis un message d'acquittement MQ au circuit 13, le premier message de télécopie MT1 qui a été transmis pendant cette communication est effacé dans la mémoire 12 sous la commande du circuit 13 via le séquenceur 17. Si le télécopieur 3 transmet un message d'erreur ME au circuit 13, alors le premier message de télécopie MT1 n'a pas été correctement transmis et n'est pas effacé dans la mémoire 12 après la rupture de la communication pour être transmis à nouveau, lors d'une prochaine communication. Lorsque la mémoire 12 contient plusieurs messages de télécopie complets, le circuit 13 choisit le premier message de télécopie écrit complètement en mémoire, ou celui qui occupe le plus de cases de mémoire, pour libérer des cases dans la mémoire 12 pour de prochains messages de télécopie.

Lorsqu'un premier message de télécopie MT1 contient une demande d'accusé de réception DAR et un numéro téléphonique d'abonné NTA associé identifiant le terminal demandeur de la communication du premier message de télécopie MT1, le circuit de communication 13 écrit la demande d'accusé de réception DAR et le numéro téléphonique d'abonné associé NTA dans la mémoire 15, sous la commande du séquenceur 17, après la rupture de la communication entre le circuit 13 et le télécopieur 3 et sous réserve que le premier message de télécopie MT1 ait été correctement transmis, c'est-à-dire que le message d'acquittement MQ ait été reçu par le circuit 13.

Le circuit de transmission d'accusé de réception 16 est commandé par le séquenceur 17 comme exposé dans la suite.

Le circuit 16 transmet un message d'accusé de réception MAR au terminal demandeur distant signalé par le numéro téléphonique d'abonné NTA lu en mémoire 15, par la ligne téléphonique LT selon une transmission de données asynchrone à faible débit, typiquement de 1200 bit/s. En réponse au message d'accusé de réception MAR, le terminal demandeur distant transmet un message d'acquittement MAQ vers le circuit 16. Ce dernier efface alors la demande d'accusé de réception DAR et le numéro téléphonique d'abonné NTA dans la mémoire 15, via le séquenceur 17.

En pratique, un message d'accusé de réception MAR correspondant à un premier message de télécopie MT1 transmis au télécopieur 3 n'est pas nécessairement transmis au terminal demandeur distant immédiatement après la transmission du premier message de télécopie MT1, par exemple parce qu'entre temps la ligne téléphonique LT devient occupée par une communication entre le télécopieur 3 et un quelconque terminal distant. La mémoire 15 contient alors à un instant donné plusieurs demandes d'accusé de réception DAR qui provoqueront ultérieurement autant de communications de message d'accusé de réception MAR entre le circuit 16 et des terminaux demandeurs distants.

En référence à la figure 4, le circuit commutateur 14 comprend principalement quatre contacts à deux directions 141, 142, 143 et 144, deux relais de commande 145 et 146 et un simulateur d'occupation 147. Comme déjà dit, par exemple pour une ligne téléphonique à deux fils, chaque contact est en fait un double contact. Le relais 145 commande simultanément les contacts 141 et 142, et le relais 146 commande simultanément les contacts 143 et 144.

Chaque contact 141, 142, 143, 144 comprend des première, seconde et troisième bornes B11, B12 et B13 ; B21, B22 et B23 ; B31, B32 et B33 ; B41, B42 et B43. Dans chaque contact, la première borne est connectée sélectivement aux seconde et troisième bornes.

Le simulateur d'occupation 147 est relié à la borne B11 du contact 141. La borne B12 du contact 141 est reliée à la borne B32 du contact 142. La borne B13 du contact 141 est reliée à la borne B22 du contact 142 et à la borne B31 du contact 143.

La ligne téléphonique LT est reliée à la borne B21 du contact 142. Le circuit de transmission d'accusé de réception 16 est relié à la borne B23 du contact 142.

Le circuit de communication 13 est relié à la borne B41 du contact 144. La borne B42 du contact 144 est reliée à la borne B33 du contact 143 et, à travers le tronçon de ligne LDT, au télécopieur 3. La borne B43 du contact 144 n'a pas de fonction de connexion.

A travers des entrées de commande E145 et E146 du circuit commutateur 14, les relais 145 et 146 sont commandés par le séquenceur 17 afin d'établir des connexions dans le dispositif 1 via les contacts 141, 142, 143 et 144.

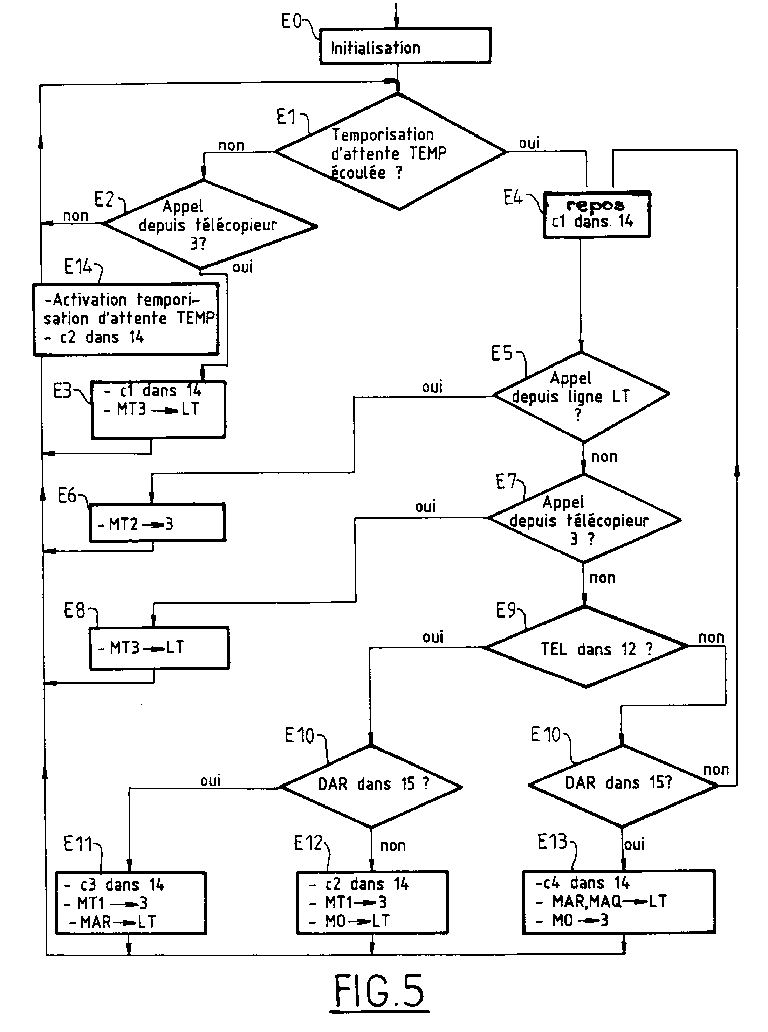

Le circuit commutateur 14 est dans l'un des quatre états suivants :
- c1) Connexions entre les bornes B11 et B12, B21 et B22, B31 et B33 et B41 et B43 : la ligne téléphonique LT-LDT est reliée au télécopieur 3, via les contacts 142 et 143 : la ligne téléphonique LT-LDT est occupée lorsque le télécopieur 3 reçoit un second message de télécopie MT2 transmis par un terminal de données tel que télécopieur distant à travers le réseau téléphonique RTC, ou transmet un troisième message de télécopie MT3 vers le réseau téléphonique RTC ; comme on le verra en référence à la figure 5, cet état de repos défini par les connexions c1 est prioritaire sur les trois autres états ;
- c2) Connexions entre les bornes B11 et B12, B21 et B22, B31 et B32, et B41 et B42, comme illustré à la figure 4 : le circuit de communication 13 est relié au télécopieur 3 et le simulateur d'occupation 147 est relié à la ligne téléphonique LT. Le circuit de communication 13 est susceptible de transmettre un premier message de télécopie MT1 lu dans la mémoire 12 au télécopieur 3. Si un appel téléphonique provient d'un terminal distant à travers le réseau téléphonique RTC, le terminal distant recevra en réponse une tonalité d'occupation ou un message d'occupation MO produit par le simulateur 147 ;
- c3) Connexions entre les bornes B11 et B13, B21 et B23, B31 et B32, et B41 et B42; le circuit de communication 13 est relié au télécopieur 3, et le circuit de transmission d'accusé de réception 16 est relié à la ligne téléphonique LT. Le circuit 13 est susceptible de transmettre un premier message de télécopie MT1 lu en mémoire 12 au télécopieur 3, et le circuit 16 est susceptible de transmettre un message d'accusé de réception MAR résultant d'une demande d'accusé de réception DAR lue en mémoire 15 vers un terminal distant via le réseau téléphonique commuté RTC, puis de recevoir un message d'acquittement MAQ ;
- c4) Connexions entre les bornes B11 et B13, B21 et B23, B31 et B33, et B41 et B43; le circuit 16 est relié à la ligne téléphonique LT, et le simulateur d'occupation 147 est relié au télécopieur 3. Le circuit 16 est susceptible de transmettre un message d'accusé de réception MAR vers un terminal distant via le réseau téléphonique commuté RTC, puis de recevoir un message d'acquittement MAQ et le télécopieur 3 ne reçoit ni ne transmet aucun message de télécopie, et ne reçoit qu'un message d'occupation MO signalant l'occupation de la ligne téléphonique LT.

Indépendamment des connexions précédentes et de l'établissement de celles-ci, des télécopies diffusées par le réseau radioélectrique sont reçues et mémorisées en mémoire 12.

En référence à la figure 5, le séquenceur 17 commande les circuits 13, 14 et 16 suivant un algorithme comprenant quinze étapes E0 à E14.

L'étape E0 initialise le fonctionnement du dispositif de commutation 1. Cette étape n'est parcourue qu'à la mise en fonctionnement du dispositif 1 et comprend notamment la mise à zéro d'une temporisation d'attente TEMP.

Après chaque communication entre le télécopieur 3 et le dispositif de commutation 1, et/ou entre le réseau téléphonique commuté RTC et le dispositif de commutation 1, c'est-à-dire après chaque communication établie à travers la borne B21 et/ou la borne B33, la temporisation d'attente TEMP est initialisée ou activée (étape E14). La temporisation TEMP a une durée comprise entre quelques secondes et quelques dizaines de secondes pendant laquelle seule une communication depuis le télécopieur 3 vers le réseau téléphonique commuté RTC peut être effectuée. Une telle communication est ainsi prioritaire particulièrement sur une communication de premier message de télécopie depuis le circuit de communication 13 vers le télécopieur 3.

L'étape E1 vérifie si la temporisation TEMP est écoulée. Si la temporisation n'est pas terminée, le séquenceur 17 vérifie à l'étape E2 grâce au détecteur d'occupation 18 si une communication de départ est demandée par le télécopieur 3.

Si aucune communication de départ n'est demandée par le télécopieur 3, l'algorithme retourne à l'étape E1.

Si une communication de départ est demandée, l'algorithme passe à l'étape de communication E3. A l'étape E3, le séquenceur 17 configure le circuit commutateur 14 selon les connexions c1. La borne B21 est connectée à la borne B22 et la borne B31 est connectée à la borne B33 pour relier le télécopieur 3 à la ligne téléphonique LT. L'étape E3 comprend ensuite la communication classique d'un troisième message MT3 entre le télécopieur 3 et un terminal distant, le dispositif de commutation 1 étant alors "transparent" à une telle communication. Après la rupture de la communication détectée par le détecteur 18, l'algorithme passe à l'étape E14 à laquelle la temporisation TEMP est activée puis le séquenceur 17 configure le circuit commutateur 14 selon les connexions c2. La borne B11 est connectée à la borne B12, la borne B31 est connectée à la borne B32 et la borne B21 est connectée à la borne B22 pour relier le simulateur d'occupation 147 à la ligne téléphonique LT. La borne B41 est reliée à la borne B42 pour connecter le télécopieur 3 au circuit de communication 13. Cependant, à cette étape le circuit 13 est inhibé par le séquenceur 17 et ne transmet pas de premier message de télécopie. Après l'étape E14, l'algorithme retourne à l'étape E1.

A partir de l'étape E1, lorsque la temporisation TEMP est écoulée, l'algorithme passe à l'étape de repos E4. Le séquenceur 17 configure le circuit commutateur 14 selon les connexions c1. La borne B21 est connectée à la borne B22 et la borne B31 est connectée à la borne B33 pour relier le télécopieur 3 à la ligne téléphonique LT. A partir de l'étape de repos E4 sont possibles une communication d'arrivée demandée par un terminal distant à travers le réseau téléphonique commuté pour transmettre un second message MT2, une communication de départ demandée par le télécopieur 3 pour transmettre un troisième message MT3 vers un terminal distant, la transmission d'un premier message de télécopie MT1 lu en mémoire 12 au télécopieur 3, et la transmission d'un message d'accusé de réception MAR, établi à partir d'une demande d'accusé de réception DAR lue en mémoire 15, à un terminal distant, suivie de la réception d'un message d'acquittement MAQ.

A l'étape E5, le séquenceur 17 surveille grâce au détecteur d'occupation 18 si une communication est demandée par un terminal distant. Si la réponse est positive, alors l'algorithme passe à l'étape de communication E6. L'étape E6 comprend le déroulement de la communication d'un second message de télécopie MT2. Comme à l'étape E3, le dispositif de commutation 1 est "transparent" à la communication du second message de télécopie. Après que le détecteur 18 ait détecté la rupture de la communication, l'algorithme retourne à l'étape E14 pour activer la temporisation d'attente TEMP et reconfigurer le circuit commutateur 14, puis à l'étape E1.

Si à l'étape E5 aucune communication d'arrivée n'est demandée par un terminal distant, l'algorithme passe à l'étape E7 afin que le détecteur 18 surveille si une communication de départ est demandée par le télécopieur 3.

L'étape E7 est analogue à l'étape E2. Si la réponse est positive, l'algorithme passe à l'étape de communication E8 qui est analogue à l'étape E3 et comprend la communication d'un troisième message MT3. Après l'étape E8, l'algorithme revient à l'étape E14.

Aux étapes E5-E6 et E7-E8, pendant que la ligne téléphonique LT est occupée par une communication d'arrivée ou de départ, le circuit de reconstruction 11 écrit les groupes de paquets corrects et complets de tout premier message de télécopie en cours de reconstruction dans la mémoire 12, et les premiers messages de télécopie déjà reconstruits et non encore lus et transmis par le circuit de communication 13 sont maintenus dans la mémoire 12.

Si la réponse à l'étape E7 est négative, l'algorithme passe à l'étape E9 pour vérifier si un premier message de télécopie MT1 à transmettre est contenu en mémoire 12, c'est-à-dire si un message de télécopie TEL a été complètement écrit dans la mémoire 12. L'étape E9 est toujours suivie d'une étape E10 au cours de laquelle le séquenceur 17 vérifie si une demande d'accusé de réception DAR a été écrite dans la mémoire 15, c'est-à-dire si un message d'accusé de réception MAR est à transmettre.

Si la réponse est positive pour les deux étapes E9 et E10, alors l'algorithme passe à l'étape de communication E11. L'étape E11 comprend la configuration du circuit commutateur 14 pour connecter les bornes B41 et B42, et les bornes B21 et B23 selon les connexions c3. A l'étape E11, le séquenceur 17 commande le circuit de communication 13 pour établir la communication avec le télécopieur 3, transmettre le premier message de télécopie MT1 lu dans la mémoire 12 et rompre la communication, comme précédemment décrit. Simultanément, le circuit 16 est commandé par le séquenceur 17 pour établir une communication avec un terminal distant, transmettre un message d'accusé de réception MAR dépendant d'une demande d'accusé de réception DAR correspondante préalablement produite par le circuit 13 et lue dans la mémoire 15, recevoir un message d'acquittement MAQ et rompre la communication, comme précédemment décrit.

Après la rupture des deux communications avec le télécopieur 3 et la ligne LT, l'algorithme retourne à l'étape E14 et la temporisation TEMP est activée.

En variante, l'étape E11 établit successivement plusieurs communications entre le circuit 16 et des terminaux distants, simultanément à une seule communication entre le circuit de communication 13 et le télécopieur 3. En effet, une communication de premier message de télécopie a généralement une durée supérieure à celle d'une communication de message d'accusé de réception. D'autre part, comme déjà précisé, plusieurs demandes d'accusé de réception DAR peuvent être simultanément mémorisées en mémoire 15, notamment en raison de la priorité des communications depuis le télécopieur 3 vers le réseau téléphonique commuté.

Le nombre de communications successives entre le circuit 16 et des terminaux distants est limité d'une part par le nombre de messages d'accusé de réception MAR à transmettre à un instant donné, et d'autre part soit par un nombre maximal, prédéterminé et fixe, soit par la durée de la communication de message de télécopie effectuée simultanément. Dans ce dernier cas, les communications successives de message d'accusé de réception MAR sont effectuées tant que la communication de premier message de télécopie n'est pas rompue. Dans tous les cas, chaque communication de message d'accusé de réception prise individuellement est identique à celle décrite précédemment.

Après la rupture de la communication avec le télécopieur 3 et la rupture de la dernière communication avec la ligne LT, l'algorithme retourne à l'étape E14.

Si aux étapes E9 et E10, au moins un premier message de télécopie MT1 est à transmettre au télécopieur 3 et aucune demande d'accusé de réception DAR correspondant à ce premier message de télécopie n'est contenue dans la mémoire 15, alors le séquenceur 17 configure à l'étape E12 le circuit commutateur 14 selon les connexions c2 en connectant les bornes B41 et B42 pour relier le circuit de communication 13 au télécopieur 3 et en connectant les bornes B11 et B12, les bornes B21 et B22, et les bornes B31 et B32 pour relier le simulateur d'occupation 147 à la ligne téléphonique LT.

L'étape E12 comprend ensuite la communication du message de télécopie MT1 entre le circuit 13 et le télécopieur 3, comme précédemment décrit, puis le retour à l'étape E14.

Si aux étapes E9 et E10, aucun message de télécopie n'est à transmettre au télécopieur 3 et au moins un message d'accusé de réception MAR est à transmettre à un terminal distant, alors l'étape E13 configure le circuit commutateur 14 selon les connexions c4 pour relier le circuit 16 à la ligne téléphonique LT et pour relier le simulateur d'occupation 147 au télécopieur 3. Le circuit 16 transmet le message d'accusé de réception MAR et reçoit un message d'acquittement MAQ. Puis l'algorithme retourne à l'étape E14.

Si aux étapes E9 et E10 aucun message de télécopie n'est à transmettre au télécopieur 3 et aucun message d'accusé de réception n'est à transmettre à un terminal distant, alors l'algorithme retourne à l'étape de repos E4.

La succession des étapes E5, E7, E9 et E10 après l'écoulement de la temporisation TEMP donne la priorité à une communication de message de télécopie d'arrivée, puis à une communication de message de télécopie de départ, par rapport à la transmission d'un premier message de télécopie MT1 mémorisé en mémoire 12 ou d'un message d'accusé de réception MAR mémorisé en mémoire 15.

## Revendications

1. Dispositif de commutation (1) entre un terminal de données (3) recevant des premiers et seconds messages de données (MT1, MT2) et transmettant des troisièmes messages de données (MT3), un récepteur (2) de données pour recevoir des premiers messages (MT1), et une ligne téléphonique (LT) recevant les seconds messages (MT2) depuis un réseau téléphonique (RTC) et transmettant les troisièmes messages (MT3) vers le réseau téléphonique (RTC), le dispositif comprenant un moyen de commutation (14) pour connecter sélectivement le terminal de données (3) au récepteur (2) de données et à la ligne téléphonique (LT),
caractérisé en ce qu'il comprend
un moyen (11) pour reconstituer des groupes de paquets (DGₘ) à partir de paquets diffusés (PAQ_{m,p}) reçus par le récepteur et rejeter des paquets ou ces groupes de paquets erronés ou incomplets, un moyen de mémoire (12) pour mémoriser les groupes de paquets corrects de manière à reconstituer les premiers messages (MT1), et un moyen de communication (13) pour lire les premiers messages reconstitués (MT1) dans le moyen de mémoire (12),
et en ce que ledit moyen de commutation (14) maintient une connexion entre le terminal de données (3) et la ligne téléphonique (LT) au moins tant que l'un des seconds et troisièmes messages de données (MT2, MT3) est reçu ou transmis par le terminal de données, et connecte le moyen de communication (13) et le terminal de données (3) lorsqu'un premier message (MT1) est reconstitué dans le moyen de mémoire (12) et lorsque la ligne téléphonique (LT) est inoccupée par aucun des seconds et troisièmes messages de données afin que le moyen de communication lise et transmette ledit au moins un premier message reconstitué (MT1) vers le terminal de données (3).

2. Dispositif de commutation conforme à la revendication 1, dans lequel chaque groupe de paquets (DGₘ) contient une séquence de contrôle, et le moyen pour reconstituer (11) n'écrit pas le groupe de paquets dans le moyen de mémoire (12) lorsque le résultat d'un traitement prédéterminé du contenu du groupe de paquets diffère d'un résultat prédéterminé.

3. Dispositif de commutation conforme à la revendication 1 ou 2, dans lequel le moyen pour reconstituer (11) écrit les groupes de paquets reconstitués et corrects d'un premier message de télécopie (TEL) dans le moyen de mémoire (12) progressivement en réponse à R répétitions successives dudit premier message de télécopie, R étant un nombre entier strictement positif, tout groupe de paquets reçu réputé erroné ou incomplet n'étant pas écrit dans le moyen de mémoire (12).

4. Dispositif de commutation conforme à l'une quelconque des revendications 1 à 3, dans lequel les premiers messages mémorisés (MT1) comprennent des demandes d'accusé de réception (DAR) qui sont détectées par le moyen de communication (13), et comprenant une mémoire (15) pour mémoriser les demandes d'accusé de réception (DAR) détectées par le moyen de communication, et un moyen de transmission (16) pour transmettre des messages d'accusé de réception (MAR) en réponse aux demandes d'accusé de réception lues dans ladite mémoire (15), le moyen de commutation (14) connectant le moyen de transmission (16) à la ligne téléphonique (LT) lorsqu'une demande d'accusé de réception est mémorisée en mémoire (15) et aucun second ou troisième message de données (MT1, MT2) n'est à recevoir ou transmettre dans la ligne téléphonique.

5. Dispositif de commutation conforme à l'une quelconque des revendications 1 à 4, comprenant un moyen (147) pour simuler une occupation de la ligne téléphonique (LT), le moyen de commutation (14) connectant le moyen pour simuler (147) à la ligne téléphonique (LT) lorsque le moyen de communication (13) est connecté au terminal de données (3) afin de lui transmettre un premier message (MT1).

6. Dispositif de commutation conforme aux revendications 4 et 5, dans lequel le moyen de commutation (14) connecte le moyen pour simuler (147) au terminal de données (3) lorsqu'un message d'accusé de réception (MAR) est à transmettre dans la ligne téléphonique (LT) par le moyen de transmission (16) et aucun des premiers, seconds et troisièmes messages de données n'est à recevoir ou transmettre.

7. Procédé de commutation pour mettre en oeuvre le dispositif conforme à l'une quelconque des revendications 1 à 6, caractérisé en ce qu'il comprend les étapes de :
- surveiller (E5, E7) une demande de communication d'arrivée ou de départ entre le terminal de données (3) et un terminal distant à travers la ligne téléphonique (LT) du réseau téléphonique commuté (RTC),
- maintenir (E6, E8) une connexion entre le terminal de données (3) et la ligne téléphonique (LT) à travers le moyen de commutation (14) en réponse à une demande de communication détectée à l'étape de surveiller (E5, E7), et mémoriser les groupes de paquets corrects et complets reçus de tout premier message (MT1) en cours de reconstruction dans le moyen de mémoire (12) notamment pendant que la ligne téléphonique (LT) est occupée,
- vérifier (E9) si un premier message de données reconstitué (MT1) est mémorisé dans le moyen de mémoire (12) lorsqu'aucune demande de communication n'est détectée à l'étape de surveiller (E5, E7), et en réponse à un premier message de données reconstitué (MT1) mémorisé dans le moyen de mémoire, connecter (E11, E12) le terminal de données (3) au moyen de communication (13) à travers le moyen de commutation (14) lorsque la ligne téléphonique est inoccupée par aucun des seconds et troisièmes messages (MT2, MT3),
- établir (E11, E12) une communication entre le moyen de communication (13) et le terminal de données (3) pour transmettre le premier message de données mémorisé (MT1), et
- connecter (E14) le terminal de données (3) à la ligne téléphonique (LT) après la rupture de la communication entre le moyen de communication (13) et le terminal de données (3).

8. Procédé de commutation conforme à la revendication 7, comprenant une validation de chaque groupe de paquets reçu en traitant ledit groupe avec une séquence de contrôle de groupe qu'il contient, de manière à n'écrire dans ledit moyen de mémoire (12) que des groupes de paquets corrects et complets.

9. Procédé de commutation conforme à la revendication 7 ou 8, comprenant la réception de R répétitions successives de chaque premier message de données (MT1) afin de n'écrire progressivement que les groupes de paquets reconstitués correctement et complètement dans le moyen de mémoire (12), R étant un nombre entier au moins égal à un.

10. Procédé de commutation conforme à l'une quelconque des revendications 7 à 9, caractérisé en ce que l'étape (E12) d'établir une communication entre le moyen de communication (13) et le terminal de données (3) comprend dans la mémoire (15) du dispositif de commutation défini à la revendication 4 la mémorisation d'une demande d'accusé de réception (DAR) détectée par le moyen de communication (13).

11. Procédé de commutation conforme à la revendication 10, caractérisé en ce qu'il comprend après l'étape (E9) de vérifier si un premier message de données est mémorisé dans le moyen de mémoire (12), les étapes de :
- vérifier (E10) si au moins une demande d'accusé de réception (DAR) est mémorisée dans la mémoire (15), et
- en réponse à une demande d'accusé de réception (DAR) mémorisée dans la mémoire (15), connecter (E11) le moyen de transmission de message d'accusé de réception (16) à la ligne téléphonique (LT) à travers le moyen de commutation (14), et
- établir (E11, E13) une communication entre le moyen de transmission de message d'accusé de réception (16) et un terminal distant à travers la ligne téléphonique (LT) pour transmettre un message d'accusé de réception (MAR) au terminal distant.

12. Procédé de commutation conforme à la revendication 11, caractérisé en ce que l'étape (E11) de connecter le terminal de données (3) au moyen de communication (13) est sensiblement simultanée avec l'étape (E13) de connecter le moyen de transmission de message d'accusé de réception (16) et le terminal distant à travers la ligne téléphonique (LT).

13. Procédé de commutation conforme à l'une quelconque des revendications 7 à 12, caractérisé en ce qu'il comprend avant l'étape de connecter les étapes de :
- activer (E14) une temporisation d'attente (TEMP) après une rupture de communication entre le terminal de données (3) et le moyen de communication (13), ou entre le terminal de données (3) et un terminal distant à travers la ligne téléphonique (LT), ou entre un moyen de transmission de message d'accusé de réception (16) et un terminal distant à travers la ligne téléphonique (LT),
- surveiller (E2) pendant la temporisation d'attente (TEMP) si une communication de départ est demandée par le terminal de données (3), et
- connecter (E3) le terminal de données (3) à la ligne téléphonique (LT) à travers le moyen de commutation (14) lorsqu'une communication de départ est détectée à l'étape de surveiller (E2) pendant la temporisation d'attente.

## Claims

1. A system (1) for switching between a data terminal (3) receiving first and second data messages (MT1, MT2) and transmitting third data messages (MT3), a data receiver (2) for receiving first messages (MT1), and a telephone line (LT) receiving the second messages (MT2) from a telephone network (RTC) and transmitting the third messages (MT3) to the telephone network (RTC), the system comprising a switching means (14) for selectively connecting the data terminal (3) to the data receiver (2) and to the telephone line (LT),
characterised in that
it comprises a means (11) for reconstituting groups of packets (DGₘ) from broadcast packets (PAQ_{m,p}) received by the receiver and rejecting erroneous or incomplete packets or groups of packets, a memory means (12) for storing the groups of correct packets so as to reconstitute the first messages (MT1), and a communication means (13) for reading the first reconstituted messages (MT1) in the memory means (12),
and in that the said switching means (14) maintains a connection between the data terminal (3) and the telephone line (LT) at least while one of the second and third data messages (MT2, MT3) is received or transmitted by the data terminal, and connects the communication means (13) and the data terminal (3) when a first message (MT1) is reconstituted in the memory means (12) and when the telephone line (LT) is unoccupied by any of the second and third data messages in order that the communication means may read and transmit the said at least one first reconstituted message (MT1) to the data terminal (3).

2. A switching system according to claim 1, wherein each group of packets (DGₘ) contains a control sequence, and the reconstituting means (11) does not write the group of packets into the memory means (12) when the result of a predetermined processing of the contents of the group of packets differs from a predetermined result.

3. A switching system according to claim 1 or 2, wherein the reconstituting means (11) writes the groups of reconstituted and correct packets of a first telefax message (TEL) in the memory means (12) progressively in response to R successive repetitions of the said first telefax message, R being a strictly positive integer, any group of packets received and considered erroneous or incomplete not being written in the memory means (12).

4. A switching system according to any one of claims 1 to 3, wherein the first stored messages (MT1) comprise requests for acknowledgement of receipt (DAR) which are detected by the communication means (13), and comprising a memory (15) for storing the requests for acknowledgement of receipt (DAR) detected by the communication means, and a transmission means (16) for transmitting acknowledgement of receipt messages (MAR) in response to the acknowledgement of receipt requests read in the said memory (15), the switching means (14) connecting the transmission means (16) to the telephone line (LT) when an acknowledgement of receipt request is stored in the memory (15) and no second or third data message (MT1, MT2) is required to be received or transmitted on the telephone line.

5. A switching system according to any one of claims 1 to 4, comprising a means (147) for simulating occupation of the telephone line (LT), the switching means (14) connecting the simulating means (147) to the telephone line (LT) when the communication means (13) is connected to the data terminal (3) in order to transmit a first message (MT1) thereto.

6. A switching system according to claims 4 and 5, wherein the switching means (14) connects the simulating means (147) to the data terminal (3) when an acknowledgement of receipt message (MAR) is to be transmitted on the telephone line (LT) by the transmission means (16) and none of the first, second and third data messages is required to be received or transmitted.

7. A switching method for using the system according to any one of claims 1 to 6, characterised in that it comprises the steps of:
- monitoring (E5, E7) a request for incoming or outgoing communication between the data terminal (3) and a remote terminal through the telephone line (LT) of the switched telephone network (RTC),
- maintaining (E6, E8) a connection between the data terminal (3) and the telephone line (LT) via the switching means (14) in response to a communication request detected in the monitoring step (E5, E7), and storing the groups of received correct and complete packets of any first message (MT1) during reconstruction in the memory means (12) inter alia while the telephone line (LT) is occupied,
- verifying (E9) if a first reconstituted data message (MT1) is stored in the memory means (12) when no communication request is detected in the monitoring step (E5, E7), and in response to a first reconstituted data message (MT1) stored in the memory means, connecting (E11, E12) the data terminal (3) to the communication means (13) via the switching means (14) when the telephone line is unoccupied by any of the second and third messages (MT2, MT3),
- establishing (E11, E12) communication between the communication means (13) and the data terminal (3) to transmit the first stored data message (MT1), and
- connecting (E14) the data terminal (3) to the telephone line (LT) after breakage of the communication between the communication means (13) and the data terminal (3).

8. A switching method according to claim 7,
comprising validation of each group of packets received by processing said group with a group control sequence it contains, so as to write in the said memory means (12) only correct and complete groups of packets.

9. A switching method according to claim 7 or 8,
comprising receiving R successive repetitions of each first data message (MT1) in order to write progressively only the correctly and completely reconstituted groups of packets in the memory means (12), R being an integer at least equal to 1.

10. A switching method according to any one of claims 7 to 9, characterised in that the step (E12) of establishing a communication between the communication means (13) and the data terminal (3) comprises in the memory (15) of the switching system defined in claim 4 storage of a receipt acknowledgement request (DAR) detected by the communication means (13).

11. A switching method according to claim 10, characterised in that it comprises after step (E9) of verifying whether a first data message is stored in the memory means (12), the steps of:
- verifying (E10) if at least one receipt acknowledgement request (DAR) is stored in the memory (15), and
- in response to a receipt acknowledgement request (DAR) stored in the memory (15), connecting (Ell) the receipt acknowledgement message transmission means (16) to the telephone line (LT) via the switching means (14), and
- establishing (E11, E13) a communication between the receipt acknowledgement message transmission means (16) and a remote terminal via the telephone line (LT) for transmitting a receipt acknowledgement message (MAR) to the remote terminal.

12. A switching method according to claim 11, characterised in that the step (Ell) of connecting the data terminal (3) to the communication means (13) is substantially simultaneous with the step (E13) of connecting the receipt acknowledgement message transmission means (16) and the remote terminal via the telephone line (LT).

13. A switching method according to any one of claims 7 to 12, characterised in that it comprises, before the connecting step, the steps of:
- activation (E14) of a waiting delay (TEMP) after a breakage of communication between the data terminal (3) and the communication means (13), or between the data terminal (3) and a remote terminal via the telephone line (LT), or between a receipt acknowledgement message transmission means (16) and a remote terminal via the telephone line (LT),
- monitoring (E2) during the waiting delay (TEMP) whether an outgoing communication is requested by the data terminal (3), and
- connecting (E3) the data terminal (3) to the telephone line (LT) via the switching means (14) when an outgoing communication is detected in the monitoring step (E2) during the waiting delay.

## Patentansprüche

1. Umschaltvorrichtung (1) zwischen einem Datenendgerät (3), das erste und zweite Datennachrichten∗∗∗ (MT1, MT2) empfängt und dritte Datennachrichten (MT3) überträgt, einem Empfänger (2) von Daten, um erste Nachrichten (MT1) zu empfangen, und einer Telephonleitung (LT), die die zweiten Nachrichten (MT2) aus einem Telephonnetz (RTC) empfängt und die dritten Nachrichten (MT3) ins Telephonnetz (RTC) überträgt, wobei die Vorrichtung ein Schaltmittel (14) umfasst, um selektiv das Datenendgerät (3) mit dem Datenempfänger (2) und der Telephonleitung (LT) zu verbinden,
dadurch gekennzeichnet, dass sie umfasst
ein Mittel (11) zur Wiederherstellung der Paketgruppen (DGₘ) aus vom Empfänger empfangenen ausgesendeten Paketen (PAQ_{m,p}), und Aussonderung der fehlerhaften oder unvollständigen Pakete oder Paketgruppen, ein Speichermittel (12) zur Speicherung der korrekten Paketgruppen derart, dass die ersten Nachrichten (MT1) wiederhergestellt werden, und ein Übertragungsmittel (13), um die wiederhergestellten ersten Nachrichten (MT1) im Speichermittel (12) zu lesen,
und dadurch, dass das genannte Schaltmittel (14) eine Verbindung zwischen dem Datenendgerät (3) und der Telephonleitung (LT) mindestens solange aufrechterhält, wie eine der zweiten oder dritten Datennachrichten (MT2, MT3) vom Datenendgerät empfangen oder gesendet wird, und das Übertragungsmittel (13) mit dem Datenendgerät (3) verbindet, wenn eine erste Nachricht (MT1) im Speichermittel (12) wiederhergestellt worden ist und wenn die Telephonleitung (LT) nicht von irgendeiner der zweiten oder dritten Datennachrichten belegt wird, damit das Übertragungsmittel die genannte mindestens eine wiederhergestellte erste Nachricht (MT1) liest und an das Datenendgerät (3) überträgt.

2. Schaltvorrichtung nach Patentanspruch 1, in dem jede Paketgruppe (DGₘ) eine Prüfsequenz enthält und das Mittel zur Wiederherstellung (11) die Paketgruppe nicht in das Speichermittel (12) speichert, wenn das Ergebnis einer vorbestimmten Verarbeitung des Inhalts der Paketgruppe von einem vorbestimmten Ergebnis abweicht.

3. Schaltvorrichtung nach Patentanspruch 1 oder 2, in der das Mittel zur Wiederherstellung (11) die wiederhergestellten und korrekten Paketgruppen einer ersten Telefaxnachricht (TEL) nach und nach in Reaktion auf R aufeinanderfolgende Wiederholungen der genannten ersten Telefaxnachricht in das Speichermittel (12) schreibt, wobei R eine streng positive ganze Zahl ist, während keine empfangene Paketgruppe, die als fehlerhaft oder unvollständig erkannt wurde, in das Speichermittel (12) geschrieben wird.

4. Schaltvorrichtung nach irgendeinem der Patentansprüche 1 bis 3, in der die gespeicherten ersten Nachrichten (MT1) Empfangsbestätigungsanforderungen (DAR) verstehen, die vom Übertragungsmittel (13) festgestellt werden und einen Speicher (15) umfassen, um die vom Übertragungsmittel festgestellten Empfangsbestätigungsanforderungen (DAR) zu speichern und ein Sendemittel (16) zur Sendung von Empfangsbestätigungsmeldungen (MAR) in Antwort auf im genannten Speicher (15) gelesene Empfangsbestätigungsanforderungen, wobei das Schaltmittel (14) das Sendemittel (16) mit der Telephonleitung (LT) verbindet, wenn eine Empfangsbestätigungsanforderung im Speicher (15) gespeichert ist und keine zweite oder dritte Datennachricht (MT1, MT2) in der Telephonleitung empfangen oder gesendet werden muss.

5. Schaltvorrichtung nach irgendeinem der Patentansprüche 1 bis 4, ein Mittel (147) zur Simulation einer Belegung der Telephonleitung (LT) umfassend, wobei das Schaltmittel (14) das Simulationsmittel (147) mit der Telephonleitung (LT) verbindet, wenn das Übertragungsmittel (13) mit dem Datenendgerät (3) verbunden ist, um ihm eine erste Nachricht (MT1) zu übertragen.

6. Schaltvorrichtung nach den Patentansprüchen 4 und 5, in der das Schaltmittel (14) das Simulationsmittel (147) mit dem Datenendgerät (3) verbindet, wenn eine Empfangsbestätigungsmeldung (MAR) durch das Sendemittel (16) in die Telephonleitung (LT) übertragen werden soll und keine der ersten, zweiten und dritten Datennachrichten empfangen oder gesendet werden soll.

7. Schaltverfahren zur Anwendung der Vorrichtung nach irgendeinem der Patentansprüche 1 bis 6, dadurch gekennzeichnet, dass es die Schritte umfasst:
- Überwachung (E5, E7) einer Anforderung der Eingangs- oder Ausgangsübertragung zwischen dem Datenendgerät (3) und einem entfernten Endgerät über die Telephonleitung (LT) des Telephonwählnetzes (RTC),
- Aufrechterhaltung (E6, E8) einer Verbindung zwischen dem Datenendgerät (3) und der Telephonleitung (LT) durch das Schaltmittel (14) in Reaktion auf eine Übertragungsanforderung, die im Überwachungsschritt (E5, E7) festgestellt wurde, und Speicherung der korrekten und vollständigen empfangenen Paketgruppe einer beliebigen ersten Nachricht (MT1), die gerade wiederhergestellt wird, ins Speichermittel (12), insbesondere, wenn die Telephonleitung (LT) belegt ist,
- Prüfung (E9), ob eine erste wiederhergestellte Datennachricht (MT1) im Speichermittel (12) gespeichert ist, wenn keine Übertragungsanforderung im Überwachungsschritt (E5, E7) festgestellt wurde, und in Reaktion auf eine wiederhergestellte erste Datennachricht (MT1), die im Speichermittel gespeichert wurde, Verbindung (E11, E12) des Datenendgeräts (3) durch das Schaltmittel (14) mit dem Übertragungsmittel (13), wenn die Telephonleitung nicht mit irgendeiner der zweiten oder dritten Nachrichten (MT2, MT3) belegt ist,
- Herstellung (E11, E12) einer Verbindung zwischen dem Schaltmittel (13) und dem Datenendgerät (3) zur Übertragung der gespeicherten ersten Datennachricht (MT1), und
- Verbindung (El) des Datenendgeräts (3) mit der Telephonleitung (LT) nach Unterbrechung der Übermittlung zwischen dem Übertragungsmittel (13) und dem Datenendgerät (3).

8. Schaltverfahren nach Patentanspruch 7, eine Freigabe jeder empfangenen Paketgruppe durch Verarbeitung der genannten Gruppe mit einer Gruppenprüfsequenz, die sie enthält, umfassend, derart, dass in das genannte Speichermittel (12) nur korrekte und vollständige Pakete geschrieben werden.

9. Schaltverfahren nach Patentanspruch 7 oder 8, den Empfang von R aufeinanderfolgenden Wiederholungen jeder ersten Datennachricht (MT1) umfassend, um nacheinander nur die korrekt und vollständig wiederhergestellten Paketgruppen ins Speichermittel (12) zu schreiben, wobei R eine ganze Zahl mindestens gleich Eins ist.

10. Schaltverfahren nach irgendeinem der Patentansprüche 7 bis 9, dadurch gekennzeichnet, dass der Schritt (E12) der Herstellung einer Verbindung zwischen dem Übertragungsmittel (13) und dem Datenendgerät (3) die Speicherung einer Empfangsbestätigungsanforderung (DAR), die vom Übertragungsmittel (13) festgestellt wurde, im Speicher (15) der Übertragungsvorrichtung, der in Patentanspruch 4 definiert wurde, umfasst.

11. Schaltverfahren nach Patentanspruch 10, dadurch gekennzeichnet, dass es nach dem Schritt (E9) der Prüfung, ob eine erste Datennachricht im Speichermittel (12) gespeichert ist, die Schritte umfasst:
- Prüfung (E10), ob mindestens eine Empfangsbestätigungsanforderung (DAR) im Speicher (15) gespeichert ist, und
- in Reaktion auf eine im Speicher (15) gespeicherte Empfangsbestätigungsanforderung (DAR), Verbindung (E11) des Mittels zur Sendung einer Empfangsbestätigungsmeldung (16) durch das Schaltmittel (14) mit der Telephonleitung (LT), und
- Herstellung (E11, E13) einer Verbindung zwischen dem Mittel zur Sendung einer Empfangsbestätigungsmeldung (16) und einem fernen Endgerät über die Telephonleitung (LT) zur Sendung einer Empfangsbestätigungsmeldung (MAR) an das ferne Endgerät.

12. Schaltverfahren nach Patentanspruch 11, dadurch gekennzeichnet, dass der Schritt (E11) der Verbindung des Datenendgeräts (3) mit dem Übertragungsmittel (13) im wesentlichen gleichzeitig ist mit dem Schritt (E13) der Verbindung des Mittels zur Sendung von Empfangsbestätigungsmeldungen (16) und des fernen Endgeräts über die Telephonleitung (LT).

13. Schaltverfahren nach irgendeinem der Patentansprüche 7 bis 12, dadurch gekennzeichnet, dass es vor dem Schritt der Verbindung die Schritte umfasst:
- Einschalten (E14) einer Wartezeit (TEMP) nach einer Unterbrechung der Verbindung zwischen dem Datenendgerät (3) und dem Übertragungsmittel (13) oder zwischen dem Datenendgerät (3) und einem fernen Endgerät über die Telephonleitung (LT), oder zwischen einem Mittel zur Sendung von Empfangsbestätigungsmeldungen (16) und einem fernen Endgerät über die Telephonleitung (LT),
- Überwachung (E2) während der Wartezeit (TEMP), ob eine Ausgangsübertragung vom Datenendgerät (3) angefordert wird, und
- Verbindung (E3) des Datenendgeräts (3) mit der Telephonleitung (LT) über das Schaltmittel (14), wenn während der Wartezeit eine Ausgangsübertragung im Schritt der Überwachung (E2) festgestellt wird.
